Europäisches Patentamt

European Patent Office

Office européen des brevets

(19)

(11) Veröffentlichungsnummer: **0 239 967**
**A2**

(12) **EUROPÄISCHE PATENTANMELDUNG**

(21) Anmeldenummer: **87104649.6**

(22) Anmeldetag: **28.03.87**

(51) Int. Cl.⁴: **B27D 1/00 , B27G 1/00**

(30) Priorität: **03.04.86 AT 872/86**
        **20.05.86 AT 1318/86**

(43) Veröffentlichungstag der Anmeldung:
**07.10.87 Patentblatt 87/41**

(84) Benannte Vertragsstaaten:
**AT BE CH DE ES FR GB GR IT LI LU NL SE**

(71) Anmelder: **Pfeifer, Oskar, Jun.**
**Unterm Hohen Rain 10**
**A-6460 Imst(AT)**

(72) Erfinder: **Pfeifer, Oskar**
**Unterm Hohen Rain 10**
**A-6460 Imst(AT)**
Erfinder: **Pfeifer, Oskar, jun.**
**Unterm Hohen Rain 10**
**A-6460 Imst(AT)**

(74) Vertreter: **Hofinger, Engelbert et al**
**Torggler-Hofinger Wilhelm-Greil-Strasse 16**
**A-6020 Innsbruck(AT)**

(54) **Mehrschichtplatte und Verfahren zur Ausbesserung von Fehlstellen.**

(57) Eine insbesondere für den Möbelbau geeignete Mehrschichtplatte (1) ist mit einer Holzspanplatte (2) als mittlerer Trägerschicht versehen, aus der zumindest einseitig, vorzugsweise beidseitig eine Bekleidung (3) aus gesägten Brettern (4) aufgeleimt ist. Die Bretter (4) sind parallel zueinander und über die Länge bzw. die Breite der Holzspanplatte (2) einstückig durchgehend angeordnet. Astlöcher in den Brettern (4) werden mit einem Schmelzkleber unter Ausbildung eines Gupfes ausgegossen. Nach dem Erhärten des Schmelzklebers wird die gesamte Brettoberfläche unter Abtragung des Gupfes geschliffen. Es entstehen künstliche Äste (5), die den Konturen ausgefallener Äste entsprechen und annähernd deren Farbe aufweisen.

EP 0 239 967 A2

Die Erfindung betrifft eine Mehrschichtplatte, insbesondere für den Möbelbau, mit einer Trägerschicht, die beidseitig mit einer vollflächigen Bekleidung versehen ist.

Im Möbelbau sind im allgemeinen Seitenwände, Deckplatten, Fachböden usw. in einer Breite erforderlich, die größer als die Breite üblicher Bretter ist, d.h. derartige Möbelbauteile aus Holz werden dadurch erhalten, daß eine Anzahl von schmäleren Brettern oder Leisten miteinander verleimt werden, um verarbeitbare Massivholzplatten zu bilden. Die Verleimung mehrerer Bretter bzw. Leisten erbringt noch den zusätzlichen Vorteil, daß durch entsprechende, das Wachstum und den Schnitt berücksichtigende Anordnung der Leisten das Verziehen und Werfen im Vergleich zu einfachen Brettern verringert bzw. vermieden werden kann. Es ist klar, daß derartige Massivholzmöbel teuer sind, und es werden daher vielfach Platten der eingangs genannten Art mit einer Holzspanplatte als Trägerschicht als preisgünstiger Ersatz verwendet. Diese weisen als Oberflächenbekleidung der Holzspanplatte eine Furnierung auf, die auch, wenn sie aus brettbreiten Streifen besteht, als solche erkennbar ist, da Furniere eine charakteristische Maserung aufweisen und im Normalfall astfrei sind.

Andere Arten von Massivholzersatzplatten weisen Sperrholzdeckplatten auf einer mittleren Trägerschicht auf, die aus einzelnen, zum Teil auch voneinander beabstandeten Leisten - schlechter Holzqualität bestehen, oder bestehen aus Holzspanplatten mit beidseitiger Kunststoffbeschichtung mit Holzcharakter.

Schließlich sind auch Dreischichtplatten aus Brettern bekannt, die nach Art von Sperrholz miteinander verleimt sind (AT-B-343 883 und AT-B-279 141). In beiden Druckschriften wird der Versuch beschrieben, das Verwerfen der Platten durch die einander kreuzenden Anordnungen der Maserungen der drei Bretterschichten zu verhindern, wobei gemäß der AT-B-343 883 auch noch das Herausfallen abgestorbener Äste vermieden werden soll. Derartige Äste stellen seit alters her ein nicht bzw. nur schlecht gelöstes Problem dar.

Während des Wachstums von Bäumen sterben an der jungen, noch niederen Pflanze bodennahe Äste ab und werden mit zunehmendem Stammumfang umwachsen. Beim Sägen des Stammes zu Brettern sind daher Stücke dieser nicht verwachsenen toten Äste vor allem in den äußeren Regionen meist nur eingeklemmt und haften auf Grund ihrer Reibung im Umgebungsmaterial. Im Gegensatz zu lebenden Ästen sind sie wesentlich dunkler, sodaß sie auch "Schwarzäste" genannt werden. Beim Trocknen der geschnittenen Bretter ergibt sich dadurch das Problem, daß sich die nicht verwachsenen Aststücke lockern und schließlich ausfallen können. Dies geschieht umso leichter, je dünner das Brett gesägt worden ist. In der Praxis ergeben sich daraus Qualitätskategorien, sodaß Bretter mit wenigen gewachsenen Ästen teurer, solche mit einem mittleren Anteil an gewachsenen Ästen auf Grund der ständigen Ausfallgefahr wesentlich billiger, und solche mit einem Anteil an nicht verwachsenen bzw. bereits ausgefallenen Ästen nur als Abfall-und Brennholz verwendbar sind. In vielen Fällen wäre aber auch astreiches Holz ästhetischer und vom Kunden gewünscht. Für den Bau-und Möbeltischler stellt es wesentliche finanzielle Nachteile dar, wenn die Äste während oder unmittelbar nach der Verarbeitung ausfallen, da eine erhöhte Wertschöpfung verlustig wird und alle bisher bekannten Lösungen zum Ausbesser n und Veredlen astreichen Holzes einen unästhetischen Kompromiß bilden. In der Fachsprache ist daher nicht zufällig von einem "Ausflicken" die Rede (DE-A-3 403 248).

Bekannte Möglichkeiten für den Einzelfall bestehen im Zuschmieren von Astlöchern mittels Kitt- oder Spachtelmassen, die eine der Holzart ähnliche Einfärbung aufweisen. Da diese Massen insgesamt zur Schrumpfrißbildung neigen und im allgemeinen an der Spachtel besser haften als im zu füllenden Astloch, ist diese Methode professionell nicht in großem Ausmaß anwendbar. Es bedarf großen handwerklichen Geschicks und Zeitaufwandes, derartige Ausbesserungen ästhetisch durchzuführen.

Der Professionist greift daher auf andere Methoden zurück. So besteht eine schon lange angewandte Möglichkeit darin, ausfallgefärdete Äste bzw. bereits bestehende Astlöcher auszubohren und Holzdübel in die Bohrungen einzuleimen (beispielsweise aus der erwähnten DE-A-3 403 248 und der DE-A-3 403 632 bekannt). Das Aussehen eines derart "ausgeflickten" Brettes ist kaum zufriedenstellend, da die gesamte Holzmaserung rund um die Flickstelle den Ast erwarten, die Flickstelle selbst jedoch keinen Ast in der charakteristischen Zeichnung erkennen läßt. Eine Besserstellung hinsichtlich der Qualtätskategorie ist dadurch nicht möglich, sondern eine derartige Vorgangsweise ist nur verwendbar, um den Ausschuß von Holzprodukten zu reduzieren, bei denen eine geschlossene, jedoch keine ästhetisch ansprechende Oberfläche erwünscht ist, etwa bei Schalungsplatten.

Es ist weiters bekannt, nach dem Ausbohren der Äste bzw. Astlöcher anstelle von Holzdübeln Scheiben von entsprechenden Ästen einzuleimen. Obwohl nun an der Stelle des natürlichen Astes ebenfalls ein Teil mit astigem Aussehen vorhanden ist, ist der nachträgliche Einbau unmittelbar erkennbar. Der Grund dafür liegt darin, daß das Astloch nur selten kreisrund, sondern im Normalfall mehr oder minder elliptisch oder noch unregelmäßiger ist.

Das ausgebohrte Astloch und die zylindrisch gefräste Astscheibe sind jedoch zwangsläufig kreisrund, sodaß auch hier die natürliche Struktur auffallend gestört ist.

Weiters beschreibt die US-A-3 844 863 ein Reparaturverfahren für schadhafte, furnierte Sperrholzplatten bzw. für schadhaftes Holz, wonach die - schadhaften Stellen mit einem Material, wie Polyesterharz, das mit Korkmehl und gegebenenfalls Farbstoffen vermischt ist, ausgegossen werden und nach dessen Aushärtung überstehendes Material entfernt wird. Auf Grund der geschlossenen Zellen und des geringen spezifischen Gewichtes des Korkmehls schwimmt dieses ungetränkt an der Oberfläche auf, sodaß nach der Abarbeitung des Überstandes Farbe, Glanz und die Oberflächenbearbeitbarkeit weitgehend dem umgebenden Holz entsprechen. Es werden also Astlöcher in Furnieren so ausgebessert, daß sie nicht mehr erkennbar sind - Äste zeigende Furniere werden allgemein als minderwertig betrachtet. Es werden weiters Astlöcher in Vollholz so ausgebessert, daß für die Herstellung von beispielsweise Zierleisten usw. die Beschneid-und Befräsbarkeit auch des gefüllten Astes, das Aussehen des Holzes (nicht des Astes) und die Beiz-oder Lackierbarkeit gewahrt bleiben.

Die US-A-4 129 231 beschreibt eine Kunstharzverarbeitungspistole, die in der Düse Kunstharz und Härter vermischt. Die aufgebrachte Masse dient zum Füllen von Astlöchern und anderen Vertiefungen und Rissen im Holz. Auch hier sollen gefüllte Astlöcher nicht als Äste erscheinen, sondern es sind, da die Masse auch zur Füllung anderer Holzdefekte eingesetzt wird, Astsimulierungen ausgeschlossen. Auch nach der DE-A-3 316 235 werden ausfallgefährdete Äste durch Einspritzen von Kunststoff fixiert. Da dieser aber auch zum Füllen von Rissen verwendet wird, wird auch hier eine Füllmasse verwendet, die Äste nicht vortäuscht, sondern glasklar durchsichtig oder im Farbton des Werkstückes eingefärbt ist.

Auch die DE-A-3 045 435 zeigt ein Verfahren, nach dem von der Astumgebung aus ein Sackloch schräg in den ausfallenden Schwarzast gebohrt und anschließend in das Sackloch unter hohem Druck eine Polyurethanverguβmasse eingespritzt wird. Voraussetzung für dieses Verfahren, das den ästhetischen Anforderungen bei entsprechend geringem Bohrungsquerschnitt genügen könnte, ist natürlich, daß der Ast noch nicht ausgefallen und verloren ist, sodaß nur ausfallgefährdete Äste gerettet werden können. Des weiteren setzt es sich aus zwei Arbeitsvorgängen, nämlich dem schrägen Bohren und dem anschließenden Einspritzen zusammen. Vor allem das Bohren erfordert eine behutsame Vorgangsweise, wenn die Oberfläche eine Sichtfläche ist.

Eine weitere Methode zur Rettung ausfallgefährdeter Äste ist schließlich in der EP-B-38293 beschrieben. Hier wird auf die Stirnseite des Astes eine Kraft ausgeübt, die eine Seitenverdrängung des Astmaterials bewirkt, wodurch der Ast wieder im Astloch verkeilt wird. Eine dieser Möglichkeiten besteht dabei auch darin, eine Nut zu prägen, in die dann Kunststoff eingespritzt wird, sodaß die Rückformung vermieden wird.

Die Erfindung hat es sich nun zur Aufgabe gestellt, eine Mehrschichtplatte der eingangs genannten Art als preisgünstigen Ersatz für aus Brettern oder Leisten verleimte Massivholzbauteile zur Verfügung zu stellen. Weiters sollen herausgefallene Äste genau an jenen Stellen, an denen auf Grund der Holzmaserung vom Beschauer Äste erwartet werden, diese auch tatsächlich erscheinen, sodaß eine weitere Aufgabe in der visuellen Erhaltung von Ästen und nicht in deren Unsichtbarmachung liegt.

Auch das fachkundige Auge soll somit den Unterschied zwischen einem nicht verwachsenen, jedoch noch im Brett verankerten Ast und dem künstlichen Ast kaum zu unterscheiden imstande sein.

Als preisgünstigen Ersatz für aus Brettern oder Leisten verleimte Massivholzbauteile schlägt nun die Erfindung bei einer Mehrschichtplatte mit einer Holzspanplatte als mittlere Trägerschicht vor, daß die Bekleidung zumindest einer Seite aus gesägten Bretern besteht, die parallel zueinander über die Länge bzw. die Breite der Holzspanplatte einstückig durchgehend mit der Holzspanplatte verleimt sind.

Damit ist eine vor allem für den Möbelbau, aber auch für Innenverschalungen, Täfelungen usw., verwendbare Mehrschichtplatte gegeben, die an der Sichtseite eine vollflächige, sichtbare Schichte aus massivem Holz aufweist, die von einer aus Brettern oder Leisten verleimten Vollholzplatte nicht unterscheidbar ist, d.h. es sind alle jene für volles Holz charakteristischen Merkmale gegeben, wie eine unregelmäßige Maserung, geschnittene Äste in zufälliger Verteilung, unterschiedliche Farbtöne usw.

Die Bekleidung aus gesägten Brettern verbessert auch die mechanischen Eigenschaften der Holzspanplatte, sodaß gegenüber einer furnierten Holzspanplatte die erfindungsgemäße Mehrschichtplatte z.B. eine erhöhte Biegezugfestigkeit aufweist.

In bevorzugter Ausführung ist vorgesehen, daß beide Seiten der Holzspanplatte mit einer Bekleidung aus gesägten Brettern versehen sind, sodaß vor allem im Möbelbau einsetzbare Mehrschichtplatten erhalten werden, deren beiden Seiten oftmals sichtbar sind.

Die Herstellung der erfindungsgemäßen Mehrschichtplatte erfolgt in bekannter Weise, indem in Pressen, wie sie beispielsweise für die Herstellung von Vollholzplatten aus zu verleimenden Leisten verwendet werden, die Holzspanplatte als Trägerschicht und die entsprechende Anzahl von Brettern für die ein-oder zweiseitige Bretterbekleidung eingelegt und verpreßt werden. Der Leim durchdringt dabei auch die Stoßflächen zwischen den einzelnen Brettern, die dadurch auch untereinander verleimt werden. Vorzugweise werden die Mehrschichtplatten anschließend ähnlich furnierten Platten geschliffen und gegebenenfalls noch oberflächenbehandelt, z.B. farblos lasiert oder lackiert.

Ist die Holzspanplatte beidseitig mit gesägten Brettern bekleidet, so ist es denkbar, diese an einer Seite längs und an der anderen Seite quer verlaufend anzuordnen. Selbstverständlich können sie sich an beiden Seiten auch in derselben Richtung erstrecken. Da die Formate roher oder furnierter Holzspanplatten Längen zwischen 2,50 m und 4,50 m und Breiten zwischen 1,70 m und 2,50 m umfassen, ist es ohne besondere Schwierigkeiten verwirklichbar, die Bretter über die Länge bzw. die Breite der Holzspanplatte einstückig durchgehen zu lassen. Moderne Sägemaschinen sind nämlich durchaus in der Lage, Bretter großer Länge zu sägen, deren Dicke im Bereich der Sägeblattdicke liegt, sodaß in der erfindungsgemäßen, verarbeitungsfertigen Mehrschichtplatte die Bretter eine Breite von 80 bis 150 mm und eine Dicke von 2 bis 5 mm aufweisen können.

Um nun, insbesondere bei den erwähnten geringen Dicken, zu vermeiden, daß durch Astausfall ein beträchtlicher Teil der gesägten Bretter Ausschuß darstellt, sieht eine weitere Ausführung vor, daß vor der Verleimung mit der Trägerschicht ausgefallene Äste der Bretter der Bekleidung konturengetreu durch eine astfarbig gehärtete Masse ausgefüllt sind.

Hinsichtlich der Maserung und der übrigen Erscheinung hochqualitative Bretter, deren nicht eingewachsene Äste beim Sägen oder Trocknen ausgefallen sind, lassen sich durch diese Vorgangsweise in ihrem Wert bewahren. Diese Werterhaltung ist vor allem bei der Herstellung der Mehrschichtplatten von noch größerer Bedeutung, da nämlich bei einer teil-oder vollautomatisierten Fertigung Äste während des maschinellen Handlings ausfallen können, was meist erst nach dem Verleimen erkannt wird.

Ein erfindungsgemäßes Verfahren zur Vergütung von Brettern, deren nicht verwachsene Äste ausgefallen sind, wobei jedes abgedeckte Astloch mit einer fließfähigen, härtbaren Masse unter Ausbildung eines Gupfes ausgegossen wird, der nach dem Erhärten entfernt wird, sieht daher vor, daß jedes abgedeckte Astloch mit einer in der Farbe natürlicher Äste erhärtenden Masse ausgegossen wird, und nach dem Erhärten der Masse die gesamte Brett-bzw. Plattenoberfläche geschliffen wird.

Als leicht verarbeitbare, sich mit der Astlochwand rißfrei verbindende, fließfähige Masse wird bevorzugt ein handelsüblicher, im ausgehärteten Zustand dunkel erscheinender, thermoplastischer Schmelzkleber verwendet, mit dem die abgedeckten Astlöcher ausgegossen werden. Die Schmelzkleber weisen eine Erweichungstemperatur zwischen 120°C und 180°C auf und werden durch eine heiße Düse den zu füllenden Astlöchern mit etwas Übermaß zugeführt, sodaß nach der innerhalb weniger Minuten erfolgten Auskühlung und Härtung ein Gupf verbleibt. Vor dem Eingießen des Schmelzklebers wird die Wand des Astes vorzugsweise mit einem geeigneten Werkzeug, etwa einem Schabeisen ausgekratzt, wodurch einerseits die Wand etwas aufgerauht wird und andererseits eventuelle Rindenreste gelöst und entfernt werden. Dies ist jedoch nicht unbedingt erforderlich.

Durch die Verwendung von Füllmassen, und insbesondere von thermoplastischen Schmelzklebern, die dunkel, vorzugsweise schwarz erhärten, um den visuellen Eindruck von Ästen, insbesondere abgestorbenen "Schwarzästen" entstehen zu lassen, wird ein ausgefallener Ast in einer Weise ersetzt, daß er als natürlicher Ast erscheint.

Das erfindungsgemäße Verfahren bringt gerade bei der Herstellung von Mehrschichtplatten, die beispielsweise als Schalungsplatten, Möbelbauplatten, Vertäfelungsplatten verwendet werden können, sehr große Einsparungen: Zum einen ist es nun nicht mehr notwendig, darauf zu achten, ob beim Zersägen der vorzugsweise zwischen 3 und 6 mm dicken Bretter ausfallgefährdete Äste enthalten sind bzw. Äste ausgefallen sind, sodaß diese unmittelbar mit der Trägerschicht verleimt werden können. Nach Verleimung der Mehrschichtplatten, beispielsweise in einer Größe von 5 $\times$ 2 Metern, werden diese vor dem Beschleifen der Oberflächen gesichtet und die gegebenenfalls vorhandenen Astlöcher erfindungsgemäß gefüllt. Dies erfordert pro Seite einen mittleren Zeitaufwand von nur zwei bis fünf Minuten, da die Plattenoberflächen ohnedies geschliffen werden müssen. Das bisher übliche Ausbohren der ausfallgefährdeten Ästen und anschließende Verdübeln läßt sich bei Brettdicken von 3 bis 6 mm nicht durchführen, sondern dies müßte bei zumindest doppelter Brettdicke erfolgen, die anschließend nochmals längs geschnitten werden.

Der bisher kaum verwendbare Ausschuß kann erfindungsgemäß mit einem Einsatz von 10 bis 20 % des Wertes einer Ausschußplatte verwendet werden.

Ein besonderer Vorteil des Schmelzklebers liegt dabei auch noch darin, daß auch nach der Behandlung mit üblichen Beizen oder farblosen lacken keine ästhetische Beeinträchtigung des gesamten Erscheinungsbildes gegeben ist. Das Beschleifen der Platten-bzw. Brettoberfläche gibt der erhärtenden Gießmasse einerseits ein mattes Aussehen und andererseits eine Feinstrukturierung, sodaß bis zu einem Durchmesser von ca. 6 bis 8 mm und der exakt wiedergegebenen, meist nicht kreisrunden Astumrißlinie der künstliche Ast nicht erkennbar war. Selbst die den Schmelzkleber eingießenden Arbeiter waren nach dem Beschleifen nur mehr auf Grund ihres Erinnerungsvermögens in der Lage, die ausgegossenen Äste zu bestimmen, wobei selbst sie absolute Sicherheit erst durch eine Überprüfung mit einem spitzen Werkzeug erlangen konnten, da Schmelzkleber weicher sind als natürliche Äste.

Bei Astlochdurchmessern von mehr als 6 bis 8 mm war es leichter, die künstlichen Äste zu erkennen, da der Schmelzkleber die in diesen Dimensionen erkennbaren Jahresringe nicht zeigen kann. Es hat sich dabei aber über raschenderweise gezeigt, daß der Schmelzkleber hier einen etwas dünkleren Kern bildet, womit eine oberflächliche Betrachtung einem Nichtinformierten ebenfalls den Eindruck eines natürlichen Astes vermittelt.

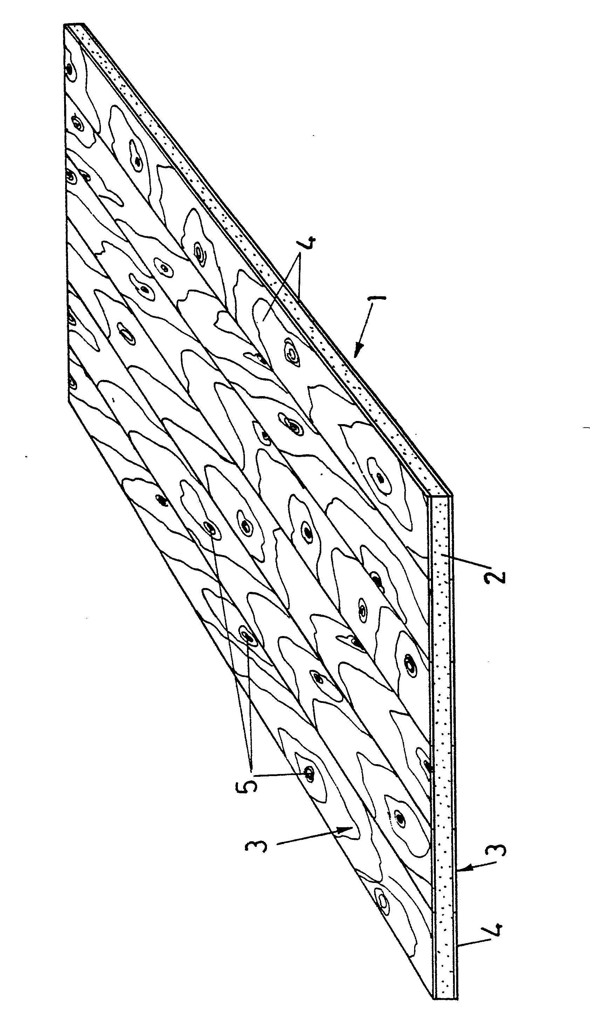

Die Erfindung wird nachstehend anhand der beiliegenden Zeichnung näher beschrieben, ohne darauf beschränkt zu sein. Diese zeigt eine Schrägansicht einer erfindungsgemäßen Mehrschichtplatte in bevorzugter Ausführung.

Die Mehrschichtplatte 1, die z.B. als Schalungsplatte, Möbelbauplatte od.dgl. gedacht ist, weist eine mittlere Trägerschicht auf, die durch eine herkömmliche Holzspanplatte 2 gebildet ist. Das Format der Mehrschichtplatte 1 liegt somit im Bereich der handlesüblichen Formate roher oder furnierter Holzspanplatten. Die Holzspanplatte 2 ist beidseitig mit einer vollflächigen Bekleidung 3 versehen, die aus gesägten Brettern 4 besteht. Diese gehen über die gesamte Länge (oder Breite) der Mehrschichtplatte 1 durch und weisen eine Breite von 80 bis 150 mm, beispielsweise von 120 mm auf; deren Dicke beträgt zwischen 2 und 6 mm, vorzugsweise 4 mm. Die Bretter 4 sind mit der Holzspanplatte 2 und untereinander unter Druck verleimt, wobei deren Oberfläche anschließend geschliffen ist. Im Aussenen ist demzufolge die Mehr

schichtplatte 1 nicht von Platten zu unterscheiden, die aus Brettern bzw. Leisten aus Massivholz verleimt sind, da sie auch deren charakteristische Maserung und Astzeichnung (quergeschnittene Äste) aufweist. Demnach stellt die Mehrschichtplatte 1 einen preisgünstigen Ersatz einer aus Leisten verleimten Massivholzplatte dar, da die mittlere Holzspanplatte 2 zumindest 50 % des Gesamtvolumens umfaßt.

Die in den handelsüblichen Plattenformaten erzeugte Mehrschichtplatte 1 läßt sich auf jede geeignete Größe beschneiden und ohne Probleme weiterbearbeiten (z.B. nuten, bohren usw.) Nach dem Zuschnitt werden die den Schichtaufbau zeigenden Umfangsflächen mit Umleimern, etwa Furnierstreifen beklebt.

Wie erwähnt, stellt eine doppelseitig mit gesägten Brettern bekleidete Mehrschichtplatte 1 eine bevorzugte Ausführung dar. Im Innenausbau als Verschalung bzw. Täfelung läßt sich eine einfachere Variante einsetzen, die die Bretterbekleidung 3 nur einseitig, also an der einzigen Sichtseite aufweist. In diesem Fall ist die Rückseite der Mehrschicht platte 1 mit einer Beschichtung aus anderem Material beklebt, um die bei einer einseitigen Beschichtung unvermeidbare Durchbiegung der Platte zu unterbinden.

In der Figur der Zeichnung sind die nichtbezifferten Äste natürliche, im Brett 4 verwachsene oder beim Trocknen, Sägen und Verleimen nicht herausgefallene, nicht verwachsene Äste, die durch die Verleimung mit der Holzspanplatte 2 ausreichend fixiert sind. Die Ziffer 5 bezeichnet nach dem erfindungsgemäßen Verfahren hergestellte künstliche Äste, die sowohl in der Umrißlinie als auch in der Färbung von den übrigen Ästen nicht oder nur bei exakter Untersuchung zu unterscheiden sind. Diese künstlichen Äste bestehen aus erhärtetem Schmelzkleber, der mit etwas Übermaß heiß in die Astlöcher eingebracht, unter Ausbildung eines Gupfes erhärtet und anschließend zugleich mit der übrigen Oberfläche plangeschliffen worden ist, wodurch er sein astfärbiges und durch Schleifspuren strukturiertes Aussehen erhalten hat. Die für das Ausgießen nötige untere Abdeckung des Astloches ist durch die Holzspanplatte 2 gegeben. Für den unbefangenen Betrachter erscheinen somit keine augenfälligen Oberflächenfehler und die erfindungsgemäß hergestellte Mehrschichtplatte 1 bildet ein Produkt höchster Holzqualität, die ja vor allem nach dem Aussehen kategorisiert wird. Die Mehrschichtplatte 1 kann weiters gebeizt oder farblos lackiert werden, ohne daß die die künstlichen Äste 5 bildende, erhärtete Füllmasse sich im vergleich zu den natürlichen "Schwarzästen" Verändert.

Dieselbe Vorgangsweise läßt sich natürlich auch bei einzelnen, losen Brettern anwenden, wobei eine einseitige Abdeckung des Astloches notwendig ist. Diese kann durch einen Arbeitstisch oder eine Auflage des Tisches gebildet sein, auf den das Brett gelegt wird und dessen Oberfläche eine höhstens leicht lösbzre Verbindung mit dem Schmelzkleber eingeht.

**Ansprüche**

1. Mehrschichtplatte, insbesondere für den Möbelbau, mit einer Holzspanplatte (2) als Trägerschicht, die beidseitig mit einer vollflächigen Bekleidung (3) versehen ist, dadurch gekennzeichnet, daß die Bekleidung (3) zumindest einer Seite aus gesägten Brettern (4) besteht, die parallel zueinander über die Länge bzw. die Breite der Holzspanplatte (2) einstückig durchgehend mit der Holzspanplatte (2) verleimt sind.

2. Mehrschichtplatte nach Anspruch 1, dadurch gekennzeichnet, daß beide Seiten der Holzspanplatte (2) mit einer Bekleidung (3) aus gesägten Brettern (4) versehen sind.

3. Mehrschichtplatte nach Anspruch 1 oder 2, dadurch gekennzeichnet, daß die Bretter (4) eine Breite von 80 bis 150 mm und eine Dicke von 2 bis 5 mm aufweisen.

4. Mehrschichtplatte nach einem der Ansprüche 1 bis 3, dadurch gekennzeichnet, daß vor der Verleimung mit der Trägerschicht (2) ausgefallene Äste der Bretter (4) der Bekleidung (3) konturengetreu durch eine astfarbig gehärtete Masse (5) ausgefüllt sind.

5. Verfahren zur Vergütung von Brettern (4), aus denen nicht verwachsene Äste herausgefallen sind, insbesondere bei der Herstellung von Mehrschichtplatten nach einem der Ansprüche 1 bis 4, wobei jedes abgedeckte Astloch mit einer fließfähigen, härtbaren Masse (5) unter Ausbildung eines Gupfes ausgegossen wird, der nach dem Erhärten der Masse (5) entfernt wird, dadurch gekennzeichnet, daß jedes abgedeckte Astloch mit einer in der Farbe natürlicher Äste erhärtenden Masse (5) ausgegegossen wird, und nach dem Erhärten der Masse (5) die gesamte Brett-bzw. Plattenoberfläche geschliffen wird.

6. Verfahren nach Anspruch 5, dadurch gekennzeichnet, daß als härtende Masse ein dunkel erscheinender Schmelzkleber verwendet wird.